# FASCICULE DE BREVET EUROPEEN

(11) **EP 0 566 479 B1**
(45) Date de publication et mention de la délivrance du brevet: **15.11.1995**
(21) Numéro de dépôt: 93400961.4
(22) Date de dépôt: 13.04.1993
(51) Int. Cl.: B01D 46/46, G01P 13/00, F02M 35/08, B01D 35/143, G01N 27/18

(54) **Dispositif de détection d'encrassement d'un filtre à air**
Verschmutzungsdetektor für Luftfilter
Fouling detector for air filter

(30) Priorité: 14.04.1992 FR 9204684; 09.02.1993 FR 9301413
(43) Date de publication de la demande: 20.10.1993
(73) Titulaire: Robin, Roger Claude, F-78990 Elancourt (FR)
(72) Inventeur: Robin, Roger Claude, F-78990 Elancourt (FR)
(74) Mandataire: Thinat, Michel

(56) Documents cités:
- DE-A- 3 642 992
- FR-A- 2 592 971
- US-A- 3 790 931

## Description

La présente invention concerne un dispositif de détection d'encrassement d'un filtre à air.

Les installations de traitement d'air, et plus particulièrement les dispositifs de chauffage et de climatisation de véhicules automobiles, sont fréquemment équipées de filtres destinés à retenir les particules en suspension dans l'air traité. Ces filtres créent des pertes de pression au passage de l'air, pertes dont l'importance est fonction de la vitesse de l'air qui les traverse. Au cours de leur utilisation, ces filtres se chargent des poussières et particules qui doivent être retenues par ceux-ci et s'encrassent progressivement.

Cet encrassement des filtres provoque un accroissement de leur perte de charge nuisible au bon fonctionnement des installations.

On connaît des équipements destinés à informer l'utilisateur de l'état d'encrassement de tels filtres. Ces équipements sont très fréquemment basés sur la mesure de la perte de pression exercée par le filtre sur l'écoulement d'air. Souvent, cette perte de pression est comparée à une valeur prédéterminée dans un circuit de comparaison qui, lorsque la perte de pression dépasse la valeur prédéterminée, déclenche une alarme invitant l'utilisateur à effectuer un nettoyage des surfaces filtrantes ou à en assurer le remplacement, ou provoque l'enclenchement d'un dispositif approprié de remise en état des surfaces filtrantes, dispositif souvent dit de "décolmatage."

De tels dispositifs sont efficaces sur des installations destinées à fonctionner à débit d'air constant. Par contre, ils ne peuvent être convenablement utilisés sur des équipements dotés de moyens de réglage de débit tels que variateurs de vitesse de rotation de ventilateur ou volets obturateurs de débit d'air comme ceux dont sont dotés les équipements de climatisation automobile.

En effet, la perte de charge des filtres d'air est fonction à la fois de deux paramètres : la vitesse de l'air qui les traverse et leur état d'encrassement.

La mesure unique de la perte de pression provoquée par le filtre ne permet pas de discerner la part due à chacune des deux causes et plus particulièrement, elle ne permet pas de discerner, à faible débit d'air, si un encrassement exagéré du filtre n'est pas atteint bien que la perte de charge constatée reste inférieure à la limite fixée.

Dans ce cas, des réalisations antérieures prévoyaient la détection d'encrassement de filtres destinés à fonctionner à débit d'air variable par le traitement de deux informations, l'une provenant de la mesure de vitesse d'air traversant le filtre, l'autre de la mesure de la perte de pression occasionnée par ce dernier.

Cette méthode présente le grave inconvénient de nécessiter le traitement de mesures effectuées en valeur absolue, ce qui implique des mesures de précision.

De telles mesures nécessitent des équipements délicats à mettre en oeuvre, coûteux et peu en rapport avec les exigences du marché automobile.

Une autre manière de signaler l'encrassement d'un filtre à air est décrite dans le document US-A-3 790 931 (voir parties 56-69), selon laquelle l'encrassement du filtre est signalé par l'ouverture de la vanne de by-pass.

La présente invention a pour objet un dispositif de détection d'encrassement d'un filtre à air permettant d'éliminer les inconvénients des dispositifs connus ci-dessus tout en présentant une grande insensibilité aux phénomènes parasites de variation de tension d'alimentation électrique et de température et d'un coût très réduit par rapport aux réalisations antérieures.

A cet effet, selon l'invention, le dispositif de détection d'encrassement d'un filtre à air situé dans un conduit principal d'une installation de traitement d'air fonctionnant à débit d'air constant ou variable, est caractérisé en ce qu'il comprend un conduit d'air auxiliaire débouchant en amont et en aval du filtre de façon à engendrer dans le conduit auxiliaire un écoulement d'air dû à la perte de charge du filtre à air et d'une vitesse variant suivant la perte de charge ; un premier moyen capteur disposé dans le conduit principal du filtre à air pour fournir un signal relatif à la vitesse d'écoulement de l'air traversant le filtre à air ; un second moyen capteur fournissant un signal relatif à la vitesse d'écoulement de l'air dans le conduit auxiliaire ; et un circuit électronique délivrant à partir des signaux des premier et second moyens capteur un signal représentatif d'un encrassement limite du filtre à air lorsque les vitesses d'écoulement d'air dans le conduit principal et le conduit auxiliaire diffèrent d'une valeur déterminée correspondant à une perte de charge limite du filtre à air.

Le conduit d'air auxiliaire a une extrémité raccordée au conduit principal en débouchant en aval du filtre à air et le second moyen capteur est disposé dans le conduit auxiliaire.

Les premier et second moyens capteurs sont constitués respectivement par deux éléments électriquement conducteurs baignant dans les écoulements d'air traversant le filtre à air et le conduit auxiliaire et à résistances variant avec la température liée à la vitesse de ces écoulements d'air.

Le circuit électronique précité est agencé pour comparer les valeurs de résistances variables de deux éléments électriquement conducteurs dont les résistances sont à coefficient de température positif ou négatif et délivrer le signal représentatif de l'encrassement limite du filtre à air lorsque le rapport des valeurs de résistances de ces deux éléments correspond à la perte de charge limite du filtre à air.

Le circuit électronique comprend un montage en pont de mesure à résistances dont deux branches adjacentes comprennent respectivement les deux éléments conducteurs à résistances variables et délivrant une tension de déséquilibre déterminée du pont lorsque le rapport des valeurs de résistances des éléments conducteurs correspond à la perte de charge limite du filtre à air ; et un amplificateur relié en sortie du montage en pont de mesure à résistances pour amplifier la tension de sortie du montage en pont de mesure et fournir ainsi le signal représentatif de l'encrassement limite du filtre à air.

Le conduit auxiliaire est branché en dérivation sur le conduit principal du filtre à air en débouchant également en amont du filtre à air.

Selon une variante de réalisation, le conduit auxiliaire a son extrémité opposée à celle débouchant dans le conduit du filtre à air communiquant avec l'atmosphère.

Le conduit auxiliaire est de dimensions telles que la vitesse d'écoulement d'air dans celui-ci aux abords du second moyen capteur est sensiblement égale, lorsque le filtre à air est propre, à la vitesse de l'air traversant le filtre à air.

Le dispositif comprend un orifice calibré, le cas échéant à section réglable, placé dans le conduit auxiliaire pour rendre les vitesses d'écoulement d'air dans les conduits principal et auxiliaire sensiblement égales.

Chaque élément électriquement conducteur à résistance variable est directement réchauffé par le courant le traversant ou est réchauffé par une résistance électrique auxiliaire à proximité de celui-ci.

L'amplificateur précité est relié à un moyen indicateur d'encrassement ou à un dispositif de décolmatage automatique du filtre à air.

Le pont de mesure du dispositif décrit ci-dessus fournit un signal exploitable à la détermination de l'encrassement ou du colmatage du filtre à air à condition que l'un des éléments sensibles à la température soit soumis au flux d'air traversant le filtre à air et que l'autre élément sensible à la température soit placé dans le conduit de dérivation dont la résistance à l'écoulement doit être indépendante de l'encrassement du filtre à air.

Cependant, cette condition n'est pas du tout respectée par le dispositif de détection ci-dessus décrit.

En effet, en premier lieu, pour que la détermination de l'encrassement du filtre ne soit pas faussée, il est nécessaire que les deux ramifications de conduit constituées par le conduit principal et le conduit de dérivation évoluent de manière identique en fonction des vitesses de circulation du fluide (air). Or, on sait que toute conduite au sein de laquelle circule un fluide présente des pertes de charge résultant de l'addition de deux phénomènes distincts comprenant a) le frottement visqueux du fluide le long des parois de la conduite entraînant des pertes de charge directement proportionnelles à la vitesse d'écoulement du fluide et b) la dissipation d'énergie cinétique provenant des changements de direction d'écoulement du fluide et/ou de variations de vitesse d'écoulement de celui-ci et proportionnelle au carré de la vitesse d'écoulement. Pour ce qui concerne les matériaux poreux ou fibreux constituant le filtre à air, les pertes par frottement sont largement prépondérantes de telle sorte que les pertes de charge de ce filtre évoluent de manière pratiquement linéaire en fonction de la vitesse d'écoulement et ne perturbent donc pas la mesure, par l'élément sensible à la température, de la vitesse d'écoulement du fluide traversant ce filtre. Par contre, pour des fluides peu visqueux tels que l'air traversant des conduits de géométrie courante quelque peu tortueux, les pertes de charge par dissipation d'énergie cinétique sont les plus influentes et c'est précisément le cas en ce qui concerne le conduit de dérivation du dispositif utilisé ci-dessus, occasionnant ainsi de telles pertes de charge qui faussent la détermination de l'encrassement du filtre à air.

En second lieu, le fonctionnement du pont de mesure à résistances variables du dispositif ci-dessus suppose que les conditions d'équilibre de température de chacun des deux éléments sensibles de ce pont soient atteintes sous le double effet d'une puissance thermique fournie à chaque élément et du refroidissement de celui-ci sous l'effet de la vitesse d'écoulement du fluide (air) dans lequel il baigne. Un fonctionnement correct de ce pont de mesure implique une identité de températures de fluide à l'approche des deux éléments sensibles de ce pont. Or, tel n'est pas le cas, car la température de l'air circulant dans le conduit de dérivation, extérieur au conduit principal, diffère substantiellement de celle du fluide en circulation dans le conduit principal et pour que de telles températures soient sensiblement égales, il serait alors nécessaire de prévoir des moyens de brassage de l'air assurant l'homogénéité des températures et une isolation parfaite des parois de ces conduits par rapport au milieu extérieur.

La présente invention a également pour but d'éliminer les inconvénients ci-dessus décrits du dispositif de détection décrit précédemment en proposant un dispositif de détection d'encrassement d'un filtre à air caractérisé en ce que le conduit auxiliaire est logé axialement dans le conduit principal et traverse le filtre à air en débouchant en amont et en aval de celui-ci et le second moyen capteur est disposé dans l'écoulement d'air traversant le conduit auxiliaire en étant situé à proximité du premier moyen capteur.

Avantageusement, le conduit auxiliaire est un tube en forme de Venturi.

Selon une autre caractéristique de l'invention, le dispositif comprend un corps de support du conduit auxiliaire, solidaire du filtre à air et délimitant dans ce dernier une portion isolée du filtre à air adjacente au conduit auxiliaire et le premier moyen capteur est situé dans l'écoulement d'air traversant la portion isolée du filtre à au.

Avantageusement, les premier et second moyens capteurs sont montés dans une partie antérieure en forme de boîtier du corps de support située à l'extérieur du filtre à air et en appui sur la face aval du filtre à air et sont situés sensiblement dans un même plan proche de la paroi formant fond de la partie antérieure en face respectivement de deux orifices réalisés dans la paroi formant fond et autorisant le passage respectivement de l'air s'écoulant à travers le conduit auxiliaire et de l'air s'écoulant à travers la portion isolée du filtre à air.

Les premier et second moyens capteurs sont montés sur une plaquette de support en étant disposés respectivement dans deux orifices de la plaquette de support logée amoviblement dans la partie antérieure du corps de support enfermée dans celle-ci par un couvercle fixé au corps de support, le couvercle comprenant également deux orifices de diamètres et d'écartement identiques à ceux des orifices de la plaquette de support et de la plaque formant fond de façon à permettre le passage d'air à travers le conduit auxiliaire et la portion isolée du filtre à air.

La plaquette de support constitue un circuit imprimé sur lequel sont implantés les premier et second moyens capteurs ainsi que le circuit électronique de traitement des signaux provenant de ces moyens capteurs.

Selon une variante de réalisation, la plaquette de support, les premier et second moyens capteurs et le circuit électronique de traitement des signaux de ces moyens capteurs constituent un composant intégré monolithique en silicium.

Avantageusement, le corps de support comprend deux éléments postérieurs identiques parallèles raccordés à la plaque formant fond de la partie antérieure et traversant le filtre à air en étant séparés l'un de l'autre de façon à définir la portion isolée précitée du filtre à air.

Le conduit auxiliaire est défini dans l'un des éléments postérieurs et par un téton prolongeant cet élément postérieur en faisant saillie du filtre à air.

L'autre élément postérieur est également prolongé par un téton faisant saillie du filtre à air et la partie antérieure du corps de support est maintenue en appui sur la face correspondante du filtre à air par deux organes de maintien fixés respectivement sur les deux tétons en venant en appui sur la face opposée du filtre à air et constitués chacun, par exemple, par une rondelle élastique fendue.

Dans le cas où le filtre à air est du type à plis, les deux éléments postérieurs du corps de support épousent le creux d'un pli du filtre et les deux tétons traversent le bord de raccordement de ce pli.

Les premier et second moyens capteurs sont constitués de préférence respectivement par deux éléments électriquement conducteurs baignant dans les écoulements d'air traversant le filtre à air et le conduit auxiliaire et à résistances variant avec la température liée à la vitesse de ces écoulements d'air.

Le circuit électronique de traitement précité est agencé pour comparer les valeurs de résistances variables des deux éléments électriquement conducteurs dont les résistances sont à coefficient de température positif ou négatif et délivrer le signal représentatif de l'encrassement limite du filtre à air lorsque le rapport des valeurs de résistances de ces deux éléments correspond à la perte de charge limite du filtre à air.

Avantageusement, le circuit électronique comprend un montage en pont de mesure à résistances dont deux branches adjacentes comprennent respectivement les deux éléments conducteurs à résistances variables et délivrant une tension de déséquilibre déterminée du pont lorsque le rapport des valeurs de résistances des éléments correspond à la perte de charge limite du filtre à air ; et un amplificateur relié en sortie du montage en pont de mesure à résistances pour amplifier la tension de sortie du montage en pont de mesure à résistances et fournir ainsi le signal représentatif de l'encrassement limite du filtre à air.

Avantageusement, la partie antérieure, les éléments postérieurs et les tétons du corps de support sont réalisés en une seule pièce.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
La figure 1 représente un mode de réalisation du dispositif de l'invention permettant de détecter l'encrassement d'un filtre à air.
La figure 2 représente une courbe montrant l'évolution des pressions dans un équipement de traitement d'air en fonction des débits et perte de charge du filtre à air associé à cet équipement.
La figure 3 représente une courbe montrant l'évolution des pressions en fonction de débits d'air résultant, dans le conduit auxiliaire de dérivation, de la perte de charge du filtre.
Les figures 4 à 6 représentent des variantes de réalisation du dispositif conforme à l'invention.
La figure 7 représente un dispositif de détection d'encrassement d'un filtre à air semblable à celui de la figure 1.
La figure 8 représente en vue éclatée le dispositif de détection d'encrassement d'un filtre à air conforme à l'invention.
La figure 9 est une vue en section suivant la ligne IX-IX de la figure 8.
La figure 10 est une vue en section suivant la ligne X-X de la figure 8.
La figure 11 est une vue en section semblable à celle de la figure 9 du dispositif de détection en position assemblée.
La figure 12 est une vue en section semblable à celle de la figure 10 du dispositif de détection en position assemblée.
La figure 13 représente en coupe le dispositif de détection de l'invention monté dans un filtre à air du type plat.
La figure 14 est une vue partielle en coupe représentant un capuchon prévu à une extrémité du tube de Venturi utilisé dans le dispositif conforme à l'invention.
La figure 15 est une vue éclatée semblable à celle de la figure 8 représentant une variante de réalisation du dispositif conforme à l'invention.
La figure 16 est une vue agrandie en perspective suivant la flèche XVI d'un composant intégré monolithique en silicium utilisé dans le dispositif de la figure 15.

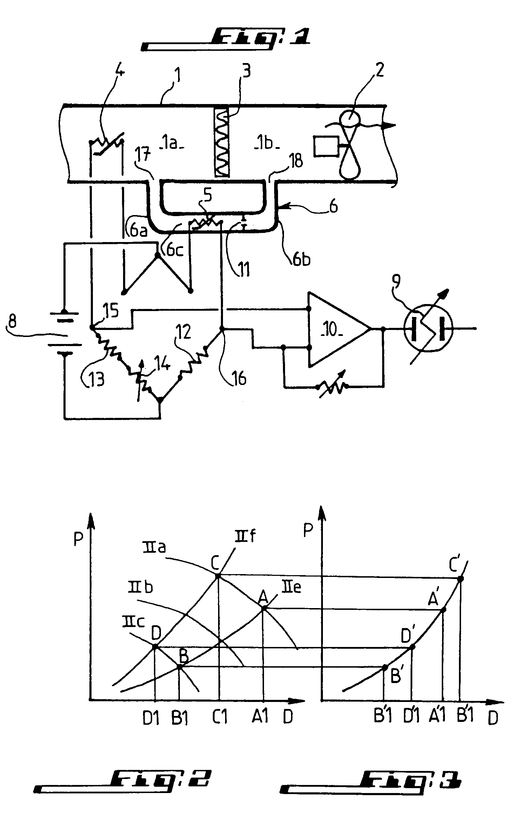

Le dispositif de l'invention va être décrit en référence à la figure 1 sur laquelle on peut voir, représentée schématiquement, une installation de traitement d'air comprenant un conduit d'air 1 raccordé à l'aspiration d'un ventilateur 2, ce conduit d'air étant pourvu d'un filtre 3 disposé entre les sections amont 1a et aval 1b du conduit d'air 1.

Sur cette figure, on peut voir une résistance électrique variable 4 placée dans la section 1a du conduit d'air 1 en un emplacement la soumettant au flux d'air traversant le filtre, et une seconde résistance électrique variable 5 placée dans un conduit auxiliaire 6 raccordé en amont et en aval du filtre à air 3 par les tronçons de conduit 6a et 6b débouchant dans le conduit 1.

Cette figure représente schématiquement l'alimentation électrique des deux résistances variables selon un montage d'alimentation dit "en pont" à partir d'une source 8 et également un organe indicateur 9 raccordé au dispositif au travers d'un amplificateur 10.

Pour plus de simplicité, le conduit auxiliaire de by-pass 6 peut être dimensionné de telle sorte que la vitesse d'écoulement de l'air dans la section d'implantation de la résistance électrique 5 soit à peu près égale à la vitesse d'écoulement de l'air dans la section 1b du conduit d'air principal lorsque le filtre est en état initial de propreté. Au besoin, pour réaliser cette égalité sans avoir à recourir à un dimensionnement délicat des conduits, un orifice calibré 11 peut être placé dans le conduit auxiliaire 6. L'orifice calibré 11 peut être remplacé par un ajutage réglable permettant d'ajuster le débit à la valeur souhaitée.

De préférence, sans que cette condition soit une nécessité, les résistances électriques variables 4, 5 peuvent être choisies de valeurs ohmiques proches ou identiques.

Le dispositif de mesure de l'état d'encrassement du filtre à air 3 utilisé sur l'équipement de traitement d'air fonctionnant à débit d'air variable a un fonctionnement basé sur le traitement comparatif de deux informations en valeurs relatives et de grandeurs physiques de même nature, grâce à un dispositif de balance thermique formé par le montage en pont à résistances.

Pour cela, le canal de faible section 6 relie les parties du conduit 1 en amont et en aval du filtre 3 et forme un by-pass de ce dernier.

En fonctionnement, s'établit en ce conduit sous l'effet de la différence de pression due à la perte de charge du filtre 3, un débit de fluide dont l'importance est tributaire de ladite perte de charge.

La balance thermique constituant le moyen de détection de colmatage du filtre est un dispositif venant effectuer la comparaison entre une information représentative de la vitesse du fluide traversant le filtre 3 et une information représentative de la vitesse d'écoulement du fluide dans le canal de by-pass 6 crée entre l'amont et l'aval du filtre 3.

La première de ces informations représentative de la vitesse d'air traversant le filtre 3 est fournie par la variation de résistance d'un conducteur électrique placé dans le flux d'air traversant ce filtre. Cette variation de résistance est provoquée sous l'influence de la vitesse d'air assurant la dissipation thermique de l'énergie électrique qui lui est appliquée, venant ainsi modifier la température de stabilisation de ladite résistance.

La seconde information est également fournie par la variation de résistance d'un second conducteur électrique disposé dans le conduit d'air auxiliaire placé en by-pass du filtre 3.

Selon un principe connu, les informations relatives à la valeur ohmique des deux résistances sont obtenues en soumettant celles-ci au passage d'un courant électrique. Le passage de ce courant provoque un échauffement desdites résistances. Cet échauffement est d'autant moins élevé que ces résistances sont plus vigoureusement refroidies par un écoulement rapide du fluide.

Il est connu que les caractéristiques de résistivités électriques de certains matériaux conducteurs varient en fonction de leur température. Ainsi, la mesure de la valeur ohmique de résistances parcourues par un courant électrique donne une information sur l'intensité de l'écoulement d'air qui les baigne. Pour la majorité des matériaux, la résistivité électrique augmente avec la température, pour certains autres, la résistivité diminue avec la température, ces derniers étant dits à coefficient négatif.

Fréquemment, les matériaux à coefficient de température positif employé dans ces applications sont des alliages de platine et les matériaux à coefficient de température négatif sont connus sous la désignation de thermistances. Sans sortir du cadre de la présente invention, l'une ou l'autre de ces familles de matériaux peut être employée.

Le montage en pont utilisé comme moyen de comparaison est susceptible de fournir une information électrique sur l'état d'équilibre des valeurs ohmiques des deux résistances variables.

L'ensemble ainsi formé, constitué d'un pont de résistances, deux de valeur ohmique fixes et deux de valeur ohmique variables, alimentées électriquement et d'un moyen amplificateur, si nécessaire, permet de détecter le déséquilibre, forme une balance thermique susceptible d'être utilisée en détection de variation relative de vitesse de fluides circulants dans les deux conduits 1 et 6.

L'information électrique issue de cette comparaison peut être acheminée directement vers l'organe indicateur 9 ou au travers du moyen amplificateur 10.

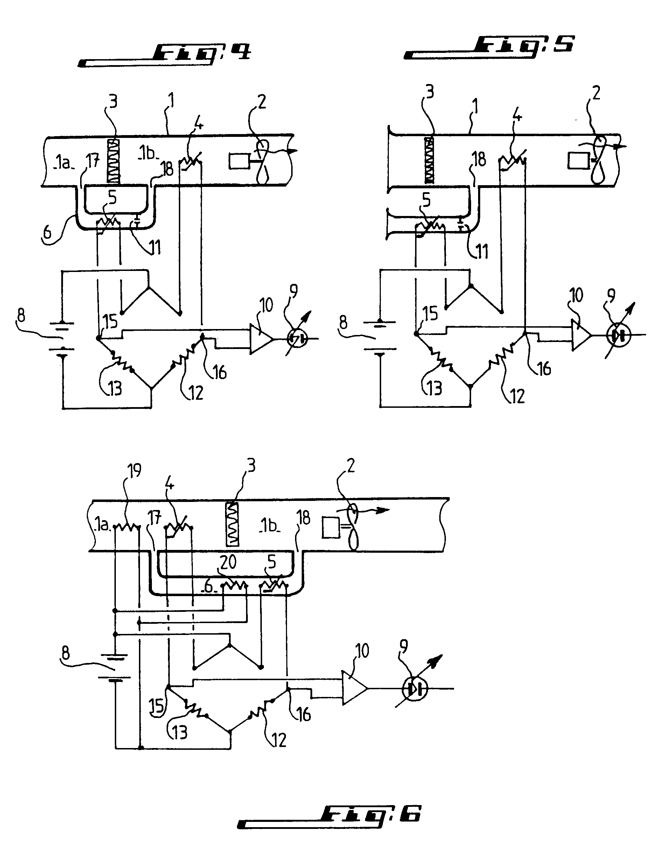

Pour comprendre plus précisément le fonctionnement de l'invention, il est utile de se reporter à la figure 2 qui expose l'évolution des pressions dans l'équipement de traitement d'air de la figure 1 en fonction des conditions de débit et de perte de charge du filtre à air 3 qui lui est associé.

Sur cette figure où ont été portés en abscisse les débits d'air et en ordonnées les pressions, on voit la courbe des débits engendrés par un ventilateur entraîné à différentes vitesses (courbes IIa à IIc) ainsi que la courbe IIe indiquant la perte de charge du filtre d'air 3, celui-ci étant supposé en état d'origine, c'est-à-aire propre.

Le point d'intersection A de la courbe figurant les performances du ventilateur tournant à la vitesse IIa avec la courbe figurant les pertes de charge de l'installation de traitement d'air IIe, indique le débit d'air et la pression fournies par le ventilateur pour ces conditions d'utilisation.

De même, le point B figurerait les conditions de débit et de pression pour la vitesse de rotation IIc du ventilateur.

Lorsqu'après un certain temps d'exploitation, le filtre à air 3 s'est progressivement chargé des poussières qu'il est destiné à retenir, ses pertes de charge augmentent et la courbe caractéristique IIe se déporte progressivement pour venir se situer en IIf considérée comme limite maximum d'un encrassement acceptable.

On voit alors que parallèlement à l'accroissement de la perte de charge du filtre 3, les points de fonctionnement A et B, toujours situés à l'intersection entre la courbe caractérisant le fonctionnement du ventilateur et la courbe figurant la perte de charge de l'installation, se déportent respectivement en C et D.

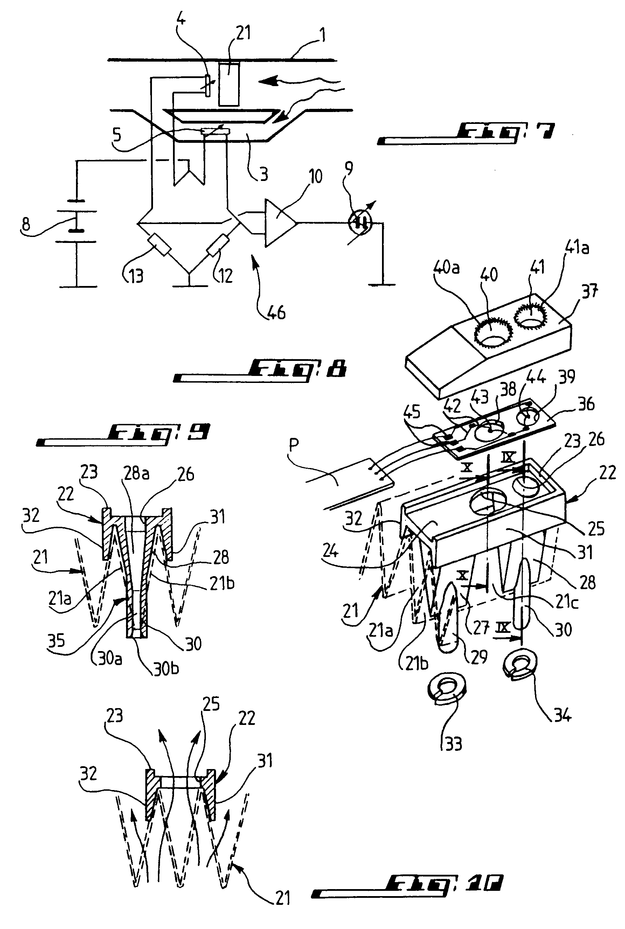

La courbe de la figure 3 indique pour la même échelle de pression mais à une autre échelle de débit, le débit d'air résultant, dans le conduit auxiliaire de by-pass 6, de la perte de charge du filtre 3.

Sur la figure 2, on constate que l'encrassement du filtre (passage du point A au point C) provoque une réduction de débit (passage du point représentatif A1 au point C1), donc de vitesse d'air au passage dans le filtre 3 et sur la figure 3, on voit qu'un accroissement de la hauteur manométrique entre faces de ce filtre provoque par contre une élévation de débit (de A'1 à C'1), donc une élévation de vitesse dans le conduit de by-pass 6.

Cette constation serait la même quelle que soit la vitesse de rotation du ventilateur ou le réglage de débit d'air de l'installation.

On comprend ainsi que la balance thermique supposée détecter les vitesses d'écoulement dans le conduit d'air principal 1 et dans le conduit de by-pass 6, en équilibre lorsque le filtre est à l'état neuf, se trouvera déséquilibrée dès que la perte de charge de ce filtre tendra à s'accroître, d'autant plus que l'une des vitesses tendra à décroître alors que l'autre ne fera que grandir.

Sur les mêmes figures, on peut encore constater que, pris isolément, les phénomènes de perte de débit dans le conduit principal 1 et de gain de débit dans le conduit de by-pass 6 sont très dépendants des conditions d'exploitation de l'installation : la perte de débit A1 à C1 fortement plus importante que la perte de débit B1 à D1, de même pour l'accroissement de débit concomitant de A'1 à C'1 en comparaison de B'1 à D'1. On peut par contre constater que la somme, en valeur absolue, de ces variations de débit, mise en évidence par le montage en pont de la balance thermique, est à peu près constante, rendant le montage relativement insensible aux conditions d'utilisation du système de traitement d'air.

En se reportant de nouveau à la figure 1, on peut voir qu'en un premier temps, en absence de tout mouvement d'air, l'ensemble étant mis sous tension, si les résistances 4 et 5 sont de valeurs ohmiques peu différentes et les résistances 12, 13 et 14 en série supposées égales, le courant dans les deux branches du pont s'établit à des valeurs sensiblement égales.

L'action sur la résistance variable 14 permet d'ajuster la valeur des résistances 13 et 14 en série à une valeur telle qu'aux points 15 et 16 du pont la tension soit égale. De valeurs ohmiques proches de l'identique et soumises à une même intensité, les résistances 4 et 5 connaissent un échauffement égal. Sous le fait de cet échauffement, les valeurs ohmiques de ces résistances se trouveront modifiées de manière identique et, de ce fait, le signal de sortie amplifié sera nul.

L'ensemble étant mis en fonctionnement, le débit d'air étant établi au travers du filtre 3, supposé propre ou très faiblement encrassé, la résistance électrique 4 se trouve refroidie proportionnellement à la vitesse de l'air qui le traverse. Sous cet effet, la valeur ohmique de cette résistance 4 se trouve modifiée par rapport à sa valeur initiale.

De manière concomitante, s'établit entre les deux faces du filtre une différence de pression qui découle à la fois de la vitesse de l'air et de l'état d'encrassement du filtre comme on peut le voir sur le diagramme de la figure 2.

Sous l'influence de cette différence de pression appliquée aux deux extrémités du conduit 6, s'établit dans la chambre 6c de celui-ci un débit d'air dont la vitesse, fixée par la valeur du diamètre de l'orifice calibré 11, est, par construction, identique à celle de l'air au passage dans la section du filtre 3.

La résistance électrique 5 soumise à la même intensité que celle qui traverse la résistance 4 subit un échauffement semblable, compensé par un refroidissement identique dû à la vitesse d'air dans la chambre 6c. De ce fait, la valeur ohmique de cette résistance 5 se trouvera modifiée identiquement à celle de la résistance 4.

Dans ces conditions, le signal de sortie restera encore nul.

Cette situation se poursuivra, quel que soit le débit engendré par le ventilateur 2, tant que le filtre 3 ne sera pas encrassé.

Tant que cette situation persistera, la différence de potentiel aux bornes 15 et 16 du pont sera nulle ou si faible qu'aucun signal ne sera produit par l'amplificateur 10.

Dès que, sous l'effet de l'accumulation de particules, la perte de charge du filtre 3 tendra à s'élever, pour un même débit d'air, engendrant une vitesse d'air donnée aux abords de la résistance 4, la différence de pression aux extrémités débouchantes 17 et 18 du conduit 6 s'élèvera.

Cette différence de pression engendrera dans la chambre 6c, aux abords de la résistance électrique 5, une vitesse d'air plus élevée que celle créée aux abords de la résistance 4. Il s'ensuivra un refroidissement plus intense de cette résistance et, par conséquent, un état thermique d'équilibre différent, donnant à cette résistance variable une valeur ohmique différente de celle de la résistance 4.

Sous l'effet de cette différence de valeur ohmique, le pont de mesure se trouvera déséquilibré et une petite différence de potentiel apparaîtra aux bornes 15 et 16 du pont. Appliquée à l'entrée de l'amplificateur 10, cette différence de potentiel fournira un signal exploitable d'alerte ou d'indication d'état d'encrassement du filtre 3.

Pour plus de facilité de compréhension, le fonctionnement de l'ensemble a été exposé en supposant des valeurs ohmiques d'origine des résistances variables identiques, mais sans sortir du cadre de l'invention, ces résistances peuvent être différentes et cette différence peut être compensée par une électronique adaptée. De même, il a été supposé que des vitesses d'air identiques étaient réalisées, hors encrassement, en sortie de filtre 3 et dans la chambre de by-pass 6. Cependant, ces vitesses peuvent être différentes pour peu que ces différences soient compensées par des valeurs appropriées de résistances ou par une électronique adaptée.

Il va de soi que le mode de réalisation ci-dessus décrit n'est qu'un exemple et que l'on pourrait le modifier notamment par substitution d'équivalents techniques, sans pour cela sortir du cadre de l'invention. En particulier, la mesure des valeurs ohmiques des résistances variables peut être réalisée par tout autre moyen connu et/ou la comparaison de ces valeurs effectuée seulement après amplification du signal de tension.

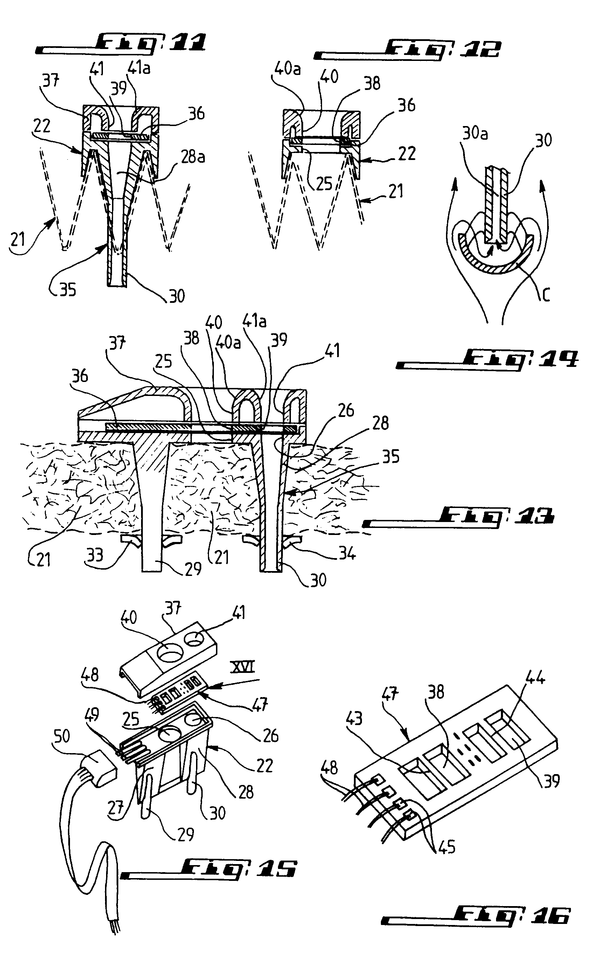

La figure 4 représente une variante de montage du pont à résistances où la résistance variable 4 soumise aux flux d'air traversant le filtre 3 est placée en aval de celui-ci sans que cette disposition ne sorte du cadre de l'invention.

La figure 5 représente une autre variante de montage qui s'adapte plus particulièrement aux cas où le filtre à air 3 est placé avant tout organe de traitement dans le sens de l'écoulement. Dans ce cas, la pression régnant en amont du filtre 3 est très proche de la pression atmosphérique ou ne diffière de celle-ci que d'une valeur qui ne dépend que du débit d'air traité. Le conduit d'air auxiliaire 6 peut alors avantageusement être réduit à un simple conduit de prise d'air extérieur.

Dans les modes de réalisation proposés ci-dessus, les résistances variables du pont de mesure ont un double rôle : assurer l'échauffement et permettre la mesure de la température de stabilisation de l'ensemble. Il va de soi que ces deux rôles pourraient être remplis par des organes séparés comme figuré à la figure 6. Sur cette figure, sont représentées deux résistances fixes de chauffage 19 et 20 alimentées électriquement depuis la source 8 et en liaison thermique avec les résistances variables 4 et 5. Sans sortir de la présente invention, par extension de cette dernière disposition, et selon un principe connu de mesure de vitesse d'écoulement, les résistances assurant le chauffage et celles assurant la mesure peuvent être séparées.

Les figures 8 à 16 représentent divers modes de réalisation perfectionnant ceux décrits précédemment.

Les figures 8 à 12 représentent le dispositif de détection conforme à l'invention assemblé à un filtre à air 21 du type à plis monté dans une conduite principale, telle que la conduite principale 1 de la figure 7, d'une installation de traitement d'air fonctionnant à débit constant ou variable et constituée par exemple par une installation de chauffage et/ou de climatisation d'un véhicule automobile.

Le dispositif de détection comprend un corps principal de support 22 constitué d'une partie antérieure en forme de boîtier 23 dont la paroi formant fond 24 comporte deux orifices circulaires traversants alignés 25 et 26 et deux éléments postérieurs parallèles 27, 28 raccordés sous la paroi 24 en faisant nettement saillie de celle-ci. Les deux éléments postérieurs 27, 28 sont identiques et sont chacun en forme de biseau épousant le creux d'un pli du filtre à air 21 défini par les faces latérales 21a et 21b du pli. Chaque élément postérieur 27, 28 est prolongé par un téton 29, 30 traversant le bord de raccordement du pli en faisant saillie de celui-ci. La partie antérieure 23 repose sur la face aval du filtre à air 21 par la paroi 24 en appui sur deux bords adjacents des deux plis situés de part et d'autre du pli contenant les éléments postérieurs 27, 28 et comporte deux parois latérales 31, 32 faisant saillie sous la paroi 24 d'une certaine distance en venant en appui respectivement sur les deux faces externes opposées des deux plis voisins. Le corps 22 est ainsi maintenu en position relativement au filtre à air 21 par les deux parois latérales 31, 32 et est fixé à ce filtre par deux rondelles élastiques fendues 33, 34 fixées par pinçage élastique respectivement sur les tétons 29 et 30 en venant en butée contre le bord de raccordement des faces latérales 21a, 21b du pli contenant les éléments postérieurs 27 et 28. De préférence, la partie antérieure 23, les éléments postérieurs 27, 28 et les tétons 29, 30 du corps 22 sont réalisés en une seule pièce.

En position d'assemblage du corps de support 22 au filtre à air 21, les éléments postérieurs 27 et 28 délimitent entre eux une portion isolée 21c du filtre à air 21 à travers laquelle s'écoule de l'air traversant, de bas en haut en considérant la figure 8, l'orifice 25.

Le téton 30 associé à l'élément postérieur 28 comporte un perçage axial cylindrique 30a débouchant dans l'orifice 26 auquel il est raccordé par l'intermédiaire d'un alésage tronconique 28a réalisé dans l'élément postérieur 28 et d'angle au sommet d'environ 7°. L'extrémité libre du téton 30 se raccorde au perçage 30a par l'intermédiaire d'un congé 30b. Le congé 30b, le perçage 30a, l'alésage tronconique 28a divergeant vers le haut par rapport à la figure 9 et l'orifice 26 forment un conduit auxiliaire en tube de Venturi 35 s'étendant dans le conduit principal parallèlement à l'axe longitudinal de celui-ci et débouchant en amont et en aval du filtre à air 21. Ainsi, de l'air peut circuler au travers du conduit auxiliaire 35 formant conduit de dérivation sans s'écouler au travers de la matière filtrante du filtre à air 21. La portion isolée 21c du filtre 21 est adjacente et donc à proximité du conduit auxiliaire 35.

Une plaquette 36 est logée amoviblement dans la partie antérieure en forme de boîte 23 du corps 22 et enfermée dans la partie 23 par un couvercle 37 fixé sur la partie antérieure 23. La plaquette 36 comporte deux orifices traversants 38 et 39 de diamètres et d'écartement égaux respectivement aux diamètres et écartement des orifices 25 et 26 de la paroi 24. En position assemblée de la plaquette 36 dans la partie 23, les orifices 38 et 39 sont coaxiaux respectivement aux orifices 25 et 26 et assurent le passage de l'air au travers de la portion filtrante 21c et du conduit auxiliaire 35. Le couvercle 37 comporte également deux orifices cylindriques 40 et 41 de diamètres et d'écartement identiques aux diamètres et écartement des orifices 38 et 39 de la plaquette 36. En position assemblée du couvercle 37 sur la partie 23, les orifices 40 et 41 sont juxtaposés coaxialement respectivement aux orifices 38 et 39 de façon à permettre l'écoulement d'air au travers de la portion filtrante 21c et du canal auxiliaire 35. Comme représenté, les orifices 40 et 41 sont raccordés à la face supérieure du couvercle 37 par des congés 40a et 41a.

La plaquette 36 est réalisée à partir d'un matériau électriquement isolant portant des pistes conductrices 42 agençant la plaquette 36 en circuit imprimé et aux extrémités desquelles sont reliées électriquement deux moyens capteurs 43 et 44 montés sur la plaquette 36 de façon à être situés aux centres respectivement des orifices 38 et 39 sensiblement dans un même plan de façon à se trouver en face respectivement des deux orifices 25 et 26 de la paroi 24. Ainsi, le moyen capteur 43 baigne dans le flux d'air traversant la portion filtrante 21c et les orifices en série 25, 38 et 40 tandis que le moyen capteur 44 baigne dans le flux d'air traversant le conduit auxiliaire 35 et les orifices en série 26, 39 et 41. La plaquette 36 comporte également des bornes 45 de connexion des sorties des moyens capteurs 43 et 44 à un circuit électronique 46 de traitement des signaux des moyens capteurs, identique à celui représenté à la figure 1, et monté sur une plaque de circuit imprimé. Le circuit électronique 46 est représenté comme étant relié aux bornes 45 par des fils électriques mais en réalité un connecteur de liaison est prévu entre la plaquette 36 et le circuit électronique 46 monté sur la plaque à circuit imprimé. Selon une variante de réalisation, le circuit électronique de traitement 46 est implanté sur la plaquette formant circuit imprimé 36.

Les moyens capteurs 43 et 44 sont identiques aux moyens capteur 4 et 5 et montés de la même manière que ceux-ci dans un montage en pont de mesure à résistances. Ainsi, le moyen capteur 43 fournit un signal électrique représentatif de la vitesse d'air traversant la portion filtrante 21c du filtre à air 21 tandis que le moyen capteur 44 fournit un signal électrique représentatif de la vitesse d'air traversant le conduit auxiliaire 35. De préférence, chaque moyen capteur 43, 44 est constitué par un conducteur électrique dont la résistance varie sous l'influence de la vitesse de l'air dans lequel il baigne et assurant la dissipation thermique de l'énergie électrique qui lui est appliquée et modifiant la température de stabilisation de la résistance de ce conducteur. Chaque moyen capteur 43, 44 peut être réalisé à base d'un matériau à coefficient de température positif dont la résistivité augmente ainsi avec la température ou à base d'un matériau à coefficient de température négatif ou thermistance dont la résistivité diminue avec la température.

Le fonctionnement du dispositif de détection conforme à l'invention ressort déjà en partie de la description qui en a été faite ci-dessus et va être maintenant expliqué.

On notera tout d'abord que l'air traversant la portion filtrante 21c délimitée entre les deux éléments postérieurs 27 et 28 est un échantillon tout à fait représentatif de l'air passant à travers l'ensemble du filtre à air 21.

Sous l'influence de la perte de charge opposée à l'écoulement d'air par le filtre 21, la différence de pression régnant entre les deux extrémités du conduit auxiliaire de Venturi 35 engendre un débit d'air dans lequel baigne le moyen capteur 44 sans avoir à franchir le filtre à air 21. On soulignera que les pertes de charge du conduit auxiliaire rectiligne 35 sont essentiellement des pertes par frottement et que ces pertes sont indépendantes de l'état d'encrassement du filtre à air 21. Il est également important de souligner que les filets d'air passant au travers du conduit auxiliaire 35 et les filets d'air traversant la portion filtrante 21c du filtre 21 ont des origines très voisines dans l'écoulement général et aucun gradient de température n'existe entre ces filets d'air puisque très voisins l'un de l'autre. En conséquence, les conditions de dissipation thermique des deux moyens capteur 43 et 44 situés à proximité l'un de l'autre ne dépendront que des débits ou vitesses d'air circulant respectivement au travers de la portion 21c du filtre 21 et du conduit auxiliaire 35.

Lorsque l'air est mis en circulation, par exemple sous l'action du ventilateur 2, dans le conduit principal 1 et que le filtre à air 21 est propre ou peu encrassé, l'air s'écoule assez librement au travers du filtre 21 engendrant une perte de charge modérée au sein de celui-ci et créant une différence de pression entre les faces de ce filtre. Cette perte de charge engendre un écoulement d'air modéré dans le conduit auxiliaire 35. Le débit d'air traversant le conduit 35 et venant baigner le moyen capteur 44 lui confère une température d'équilibre thermique résultant de l'action conjuguée du passage du courant électrique dans le moyen capteur 44 délivré par le pont de mesure et de la vitesse d'écoulement d'air. Comparativement, l'air s'écoulant au travers de la portion filtrante 21c du filtre 21 à vitesse comparable à celle de l'air passant au travers du filtre lui-même, refroidit plus vigoureusement le moyen capteur 43 qui trouvera une température d'équilibre plus faible que celle du moyen capteur 44. Dans ce cas, le pont de mesure fournit à l'amplificateur 10 un signal destiné à activer le moyen indicateur 9 signalant l'état propre du filtre à air 21.

Lorsque le filtre s'encrasse progressivement sous l'effet de la rétention de particules en suspension dans l'air traité, la perte de charge engendrée par le filtre 21 tendra à s'accroître en augmentant concomitamment la différence de pression entre les extrémités du canal auxiliaire de Venturi 35 et donc la vitesse d'écoulement d'air dans ce conduit. Progressivement, la température de stabilisation du moyen capteur 44 s'abaissera de sorte que la valeur ohmique de l'élément conducteur de ce moyen capteur rejoindra la valeur ohmique de l'élément conducteur du moyen capteur 43, amenant alors le pont de mesure du circuit 46 à son point d'équilibre à la limite de fournir un signal représentatif de l'encrassement du filtre. Si l'encrassement du filtre 21 se poursuit, la perte de charge engendrée par le filtre 21 s'élèvera également, accroissant encore l'écart de pression entre les extrémités du canal auxiliaire de Venturi 35 et donc la vitesse de circulation de l'air dans lequel baigne le moyen capteur 44 dont la valeur ohmique est alors modifiée pour produire un déséquilibre net du pont de mesure qui fournit à l'amplificateur 10 une tension électrique représentative de l'encrassement du filtre.

La figure 13 représente le même dispositif que celui de la figure 8 mais implanté dans un filtre à air plan 21.

La figure 14 représente une variante de réalisation du dispositif de la figure 8 selon laquelle on prévoit un capuchon C approximativement semi-sphérique disposé au voisinage de l'extrémité du téton 30 du conduit de Venturi 35 sans obturer celui-ci. Le capuchon C a pour rôle de créer une circulation d'air en chicane à l'entrée du conduit de Venturi 35 agissant en séparateur inertiel pour éviter aux poussières de grand diamètre d'obstruer le col de faible diamètre du conduit de Venturi 35.

Les figures 15 et 16 représentent une variante de réalisation du dispositif de la figure 8 et selon laquelle la plaquette de support 36, les deux moyens capteurs 43, 44 et le circuit électronique 46 constituent un composant intégré monolithique en silicium 47 logé dans la partie antérieure 23 du corps 22. Comme représenté, les moyens capteurs 43 et 44 sont disposés transversalement respectivement à deux fenêtres 38 et 39 qui correspondent aux orifices 38 et 39 de la figure 8. Ces figures montrent également que les bornes de contact 45 sont reliées à des fils électriques 48 électriquement reliés à des barrettes 49 s'engageant dans des parties femelles correspondantes d'un connecteur électrique 50 relié au moyen indicateur 9 d'encrassement du filtre 21 ou à un dispositif de décolmatage automatique de ce filtre.

## Revendications

1. Dispositif de détection d'encrassement d'un filtre à air (3 ; 21) situé dans un conduit principal (1) d'une installation de traitement d'air fonctionnant à débit d'air constant ou variable, comprenant un conduit d'air auxiliaire (6 ; 35) débouchant en amont et en aval du filtre à air (3 ; 21) caractérisé en ce que le conduit d'air auxiliaire (6 ; 35) engendre un écoulement d'air dû à la perte de charge du filtre à air (3 ; 21) et d'une vitesse variant suivant la perte de charge et en ce que le dispositif comprend également : un premier moyen capteur (4 ; 43) disposé dans le conduit principal (1) pour fournir un signal relatif à la vitesse d'écoulement de l'air traversant le filtre à air (3 ; 21) ; un second moyen capteur (5 ; 44) fournissant un signal relatif à la vitesse d'écoulement de l'air dans le conduit auxiliaire (6 ; 35) ; et un circuit électronique (46) délivrant à partir des signaux des premier et second moyens capteurs (4, 5 ; 43, 44) un signal représentatif d'un encrassement limite du filtre à air (3 ; 21) lorsque les vitesses d'écoulement d'air dans le conduit principal (1) et le conduit auxiliaire (6 ; 35) diffèrent d'une valeur déterminée correspondant à une perte de charge limite du filtre à air (3 ; 21).

2. Dispositif selon la revendication 1, caractérisé en ce que le conduit d'air auxiliaire (6) a une extrémité raccordée au conduit principal (1) en débouchant en aval du filtre à air (3) et le second moyen capteur (5) est disposé dans le conduit auxiliaire (6).

3. Dispositif selon la revendication 1 ou 2, caractérisé en ce que le conduit auxiliaire (6) est branché en dérivation sur le conduit principal (1) en débouchant également en amont du filtre à air (3).

4. Dispositif selon la revendication 1 ou 2, caractérisé en ce que le conduit auxiliaire (6) a son extrémité opposée à celle débouchant dans le conduit du filtre à air (3) communiquant avec l'atmosphère.

5. Dispositif selon l'une des revendications précédentes, caractérisé en ce que le conduit auxiliaire (6) est de dimensions telles que la vitesse d'écoulement d'air dans celui-ci aux abords du second moyen capteur (5) est sensiblement égale, lorsque le filtre à air (3) est propre, à la vitesse de l'air traversant le filtre à air (3).

6. Dispositif selon la revendication 5, caractérisé en ce qu'il comprend un orifice calibré (6b), le cas échéant à section réglable, placé dans le conduit auxiliaire (6) pour rendre les vitesses d'écoulement d'air dans les conduits principal (1) et auxiliaire (6) sensiblement égales.

7. Dispositif selon la revendication 1, caractérisé en ce que le conduit auxiliaire (35) est logé axialement dans le conduit principal (1) et traverse le filtre à air (21) en débouchant en amont et en aval de celui-ci et le second moyen capteur (44) est disposé dans l'écoulement d'air traversant le conduit auxiliaire (35) en étant situé à proximité du premier moyen capteur (43).

8. Dispositif selon la revendication 7, caractérisé en ce que le conduit auxiliaire (35) est un tube en forme de Venturi.

9. Dispositif selon la revendication 7 ou 8, caractérisé en ce qu'il comprend un corps de support (22) du conduit auxiliaire (35), solidaire du filtre à air (21) et délimitant dans ce dernier une portion isolée (21c) du filtre à air (21) adjacente au conduit auxiliaire (35) et en ce que le premier moyen capteur (43) est situé dans l'écoulement d'air traversant la portion isolée (21c) du filtre à air (21).

10. Dispositif selon la revendication 9, caractérisé en ce que les premier et second moyens capteurs (43, 44) sont montés dans une partie antérieure (23) en forme de boîtier du corps de support (22) située à l'extérieur du filtre à air (21) et en appui sur la face aval du filtre à air (21) et sont situés sensiblement dans un même plan proche de la paroi formant fond (24) de la partie antérieure (23) en face respectivement de deux orifices (25, 26) réalisés dans la paroi formant fond (24) et autorisant le passage respectivement de l'air s'écoulant à travers le conduit auxiliaire (35) et de l'air s'écoulant à travers la portion isolée (21c) du filtre à air (21).

11. Dispositif selon la revendication 10, caractérisé en ce que les premier et second moyens capteurs (43, 44) sont montés sur une plaquette de support (36) en étant disposés respectivement dans deux orifices (38, 39) de la plaquette de support (36) logée amoviblement dans la partie antérieure (23) du corps de support (22) et enfermée dans celle-ci par un couvercle (37) fixé au corps de support (22) et qui comprend également deux orifices (40, 41) de diamètres et d'écartement identiques à ceux des orifices (38, 34, 25, 26) de la plaquette de support (36) et de la plaque formant fond (24) de façon à permettre le passage d'air à travers le conduit auxiliaire (35) et la portion isolée (21c) du filtre à air (21).

12. Dispositif selon la revendication 11, caractérisé en ce que la plaquette de support (35) constitue un circuit imprimé sur lequel sont implantés les premier et second moyens capteurs (43, 44) ainsi que le circuit électronique (46) de traitement des signaux provenant de ces moyens capteurs (43, 44).

13. Dispositif selon la revendication 11, caractérisé en ce que la plaquette de support (35), les premier et second moyens capteurs (43, 44) et le circuit électronique de traitement (46) des signaux de ces moyens capteurs constituent un composant intégré monolithique en silicium (47).

14. Dispositif selon l'une des revendications 9 à 13, caractérisé en ce que le corps de support (22) comprend deux éléments postérieurs identiques parallèles (27, 28) raccordés à la plaque formant fond (24) de la partie antérieure (23) et traversant le filtre à air (21) en étant séparés l'un de l'autre de façon à définir la portion isolée (21c) du filtre à air (21).

15. Dispositif selon la revendication 14, caractérisé en ce que le conduit auxiliaire (35) est défini dans l'un (28) des éléments postérieurs (27, 28) et par un téton (30) prolongeant cet élément postérieur (28) en faisant saillie du filtre à air (21).

16. Dispositif selon les revendications 14 et 15, caractérisé en ce que l'autre élément postérieur (27) est également prolongé par un téton (29) faisant saillie du filtre à air et en ce que la partie antérieure (23) du corps de support (32) est maintenue en appui sur la face correspondante du filtre à air (21) par deux organes de maintien (33, 34) fixés respectivement sur les deux tétons (29, 30) en venant en butée sur la face opposée du filtre à air (21) et constitués chacun, par exemple, par une rondelle élastique fendue.

17. Dispositif selon les revendications 14 à 16, caractérisé en ce que, dans le cas où le filtre à air (21) est du type à plis, les deux éléments postérieurs (27, 28) du corps de support (22) épousent le creux d'un pli du filtre à air (21) et les deux tétons (29, 30) traversent le bord de raccordement de ce pli.

18. Dispositif selon l'une des revendications 7 à 17, caractérisé en ce que la partie antérieure (23), les éléments postérieurs (27, 28) et les tétons (29, 30) du corps de support (22) sont réalisés en une seule pièce.

19. Dispositif selon l'une des revendications précédentes, caractérisé en ce que les premier et second moyens capteurs (43, 44) sont constitués respectivement par deux éléments électriquement conducteurs baignant dans les écoulements d'air traversant le filtre à air (21) et le conduit auxiliaire (35) et à résistances variant avec la température liée à la vitesse de ces écoulements d'air.

20. Dispositif selon la revendication 19, caractérisé en ce que le circuit électronique (46) est agencé pour comparer les valeurs de résistances variables des deux éléments électriquement conducteurs dont les résistances sont à coefficients de température positif ou négatif et délivrer le signal représentatif de l'encrassement limite du filtre à air (21) lorsque le rapport des valeurs de résistances de ces deux éléments (4, 43 ; 5, 44) correspond à la perte de charge limite du filtre à air (21).

21. Dispositif selon la revendication 19 ou 20, caractérisé en ce que le circuit électronique (46) comprend un montage en pont de mesure à résistances et dont deux branches adjacentes comprennent respectivement les deux éléments conducteurs à résistances variables (4, 43 ; 5, 44) et délivrant une tension de déséquilibre déterminée du pont lorsque le rapport des valeurs des résistances des éléments conducteurs (4, 43 ; 5, 44) correspond à la perte de charge limite du filtre à air (3 ; 21) ; et un amplificateur (10) relié en sortie du montage en pont de mesure à résistances pour amplifier la tension de sortie du montage en pont de mesure et fournir ainsi le signal représentatif de l'encrassement limite du filtre à air (3 ; 21) à un moyen indicateur d'encrassement (9) ou à un dispositif de décolmatage automatique du filtre à air (3 ; 21).

22. Dispositif selon l'une des revendications 19 à 21, caractérisé en ce que chaque élément électriquement conducteur à résistance variable (4 ; 5) est directement réchauffé par le courant le traversant ou est réchauffé par une résistance électrique auxiliaire à proximité de celui-ci.

23. Dispositif selon l'une des revendications précédentes, caractérisé en ce que l'amplificateur (10) est relié à un moyen indicateur d'encrassement (9) ou à un dispositif de décolmatage automatique du filtre à air (21).

## Claims

1. Device for the detection of the clogging of an air filter (3;21) located in a main duct (1) of an air treatment equipment operating with a constant or variable air flow rate, comprising an auxiliary air duct (6;35) opening upstream and downstream of the air filter (3;21), characterized in that the auxiliary air duct (6;35) generates an air flow due to the head loss of the air filter (3;21) and with a speed varying according to the head loss and in that the device also comprises a first sensing means (4;43) arranged in the main duct (1) to provide a signal relating to the flow velocity of the air flowing through the air filter (3;21); a second sensing means providing a signal relating to the air flow velocity in the auxiliary duct (6;35); and an electronic circuit (46) delivering from the signals of the first and second sensing means (4,5; 43, 44) a signal representative of a limit clogging of the air filter (3;21) when the air flow speeds in the main duct (1) and the auxiliary duct (6;35) differ by a determined value corresponding to a limit head loss of the air filter (3;21).

2. Device according to claim 1, characterized in that the auxiliary air duct (6) has one end connected to the main duct (1) while opening downstream of the air filter (3) and the second sensing means (5) is arranged within the auxiliary duct (6).

3. Device according to claim 1 or 2, characterized in that the auxiliary duct (6) is branched off the main duct (1) in by-passing relationship while also opening upstream of the air filter (3).

4. Device according to claim 1 or 2, characterized in that the auxiliary duct (6) has its end opposite to that opening into the duct of the air filter (3) communicating with the atmosphere.

5. Device according to one of the foregoing claims, characterized in that the auxiliary duct (6) has such a size that the air flow velocity therein in the vicinity of the second sensing means (5) is substantially equal to the speed of the air flowing through the air filter (3) when the air filter (3) is clean.

6. Device according to claim 5, characterized in that it comprises a calibrated aperture (6b) if need be with an adjustable section, placed within the auxiliary duct (6) for making substantially equal the air flow velocities in the main duct (1) and auxiliary duct (6).

7. Device according to claim 1, characterized in that the auxiliary duct (35) is actually accommodated within the main duct (1) and extends through the air filter (21) while opening upstream and downstream of the latter and the second sensing means (44) is arranged within the air flow flowing through the auxiliary duct (35) while being located near the first sensing means (43).

8. Device according to claim 7, characterized in that the auxiliary duct (35) is a tube shaped as a Venturi nozzle.

9. Device according to claim 7 or 8, characterized in that it comprises a body (22) for supporting the auxiliary duct (35), made fast to the air filter (21) and defining with the latter an insulated portion (21c) of the air filter (21) adjacent to the auxiliary duct (35) and in that the first sensing means (43) is located within the air flow flowing through the insulated portion (21c) of the air filter (21).

10. Device according to claim 9, characterized in that the first and second sensing means (43, 44) are mounted in a box-shaped front portion of the supporting body (22), located outside of the air filter (21) and bearing upon the downstream face of the air filter (21) and are located substantially in a same plane close to the wall forming the bottom (24) of the front portion (23) in front of two apertures (25, 26), respectively, formed in the bottom wall (24) and allowing the passage of the air flowing through the auxiliary duct (35) and of the air flowing through the insulated portion (21c) of the air filter (21), respectively.

11. Device according to claim 10, characterized in that the first and second sensing means (43, 44) are mounted onto a supporting plate (36) while being arranged within two apertures (38, 39), respectively, of the supporting plate (36) removably housed in the front portion (23) of the supporting body (22) and enclosed therein by a cover (37) fastened to the supporting body (22) and which also comprises two apertures (40, 41) with diameters and a spacing identical with those of the apertures (38, 34, 25, 26) of the supporting plate (36) and of the bottom wall (24) so as to permit the passage of air through the auxiliary duct (35) and the insulated portion (21c) of the air filter (21).

12. Device according to claim 11, characterized in that the supporting plate (35) constitutes a printed circuit onto which are set the first and second sensing means (43, 44) as well as the electronic circuit (46) for processing the signals originating from these sensing means (43, 44).

13. Device according to claim 11, characterized in that the supporting plate (35), the first and second sensing means (43, 44) and the electronic circuit (46) for processing the signals from these sensing means constitute an integrated monolithic silicon component (47).

14. Device according to one of claims 9 to 13, characterized in that the supporting body (22) comprises two identical parallel rear elements (27, 28) connected to the bottom plate (24) of the front portion (23) and extending through the air filter (21) while being separated from each other so as to define the insulated portion (21c) of the air filter (21).

15. Device according to claim 14, characterized in that the auxiliary duct (35) is defined within one (28) of the rear elements (27, 28) and by a stud (30) extending this rear element (28) while projecting from the air filter (21).

16. Device according to claims 14 and 15, characterized in that the other rear element (27) is also extended by a stud (29) projecting from the air filter and in that the front portion (23) of the supporting body (32) is held in bearing relationship upon the corresponding face of the air filter (21) by two holding members (33, 34) fastened to both studs (29, 30), respectively, while abutting against the opposite face of the air filter (21) and constituted each one for example by a split resilient washer.

17. Device according to claims 14 to 16, characterized in that in the case where the air filter (21) is of the type with folds, both rear elements (27, 28) of the supporting body (22) are conforming to the hollow of one fold of the air filter (21) and both studs (29, 30) extend through the connecting edge of this fold.

18. Device according to one of claims 7 to 17, characterized in that the front portion (23), the rear elements (27, 28) and the studs (29, 30) of the supporting body (22) are made in one single piece.

19. Device according to one of the foregoing claims, characterized in that the first and second sensing means (43, 44) are constituted by two electrically conducting elements, respectively, steeping in the air flows flowing through the air filter (21) and the auxiliary duct (35) and having resistances varying with the temperature bound to the velocities of these air flows.

20. Device according to claim 19, characterized in that the electronic circuit (46) is arranged to compare the values of the variable resistances of both electrically conducting elements the resistances of which have positive or negative temperature coefficients and to deliver the signal representative of the limit clogging of the air filter (21) when the ratio of the values of the resistances of these two elements (4, 43; 5, 44) corresponds to the limit head loss of the air filter (21).

21. Device according to claim 19 or 20, characterized in that the electronic circuit (46) comprises a measuring bridge connection with resistors, two adjacent legs of which comprise both conducting elements (4, 43; 5, 44) with variable resistances, respectively, and delivering a determined voltage of imbalance of the bridge when the ratio of the values of the resistances of the conducting elements (4, 43; 5, 44) corresponds to the limit head loss of the air filter (3;21); and an amplifier (10) connected at the output of the measuring bridge connection with resistors to amplify the output voltage of the measuring bridge connection and to thus provide the signal representative of the limit clogging of the air filter (3;21) to a clogging indicating means (9) or to a device for the automatic unclogging of the air filter (3;21).

22. Device according to one of claims 19 to 21, characterized in that each electrically conducting element with variable resistance (4;5) is directly heated by the current flowing therethrough or is heated by an auxiliary electric resistor close thereto.

23. Device according to one of the foregoing claims, characterized in that the amplifier (10) is connected to a clogging indicating means (9) or to a device for the automatic unclogging of the air filter (21).

## Patentansprüche

1. Vorrichtung zur Aufspürung der Verschmutzung eines in einer Hauptleitung (1) einer mit einer konstanten oder veränderlichen Luftdurchsatzmengenleistung arbeitenden Luftbehandlungsanlage gelegenen Luftfilters (3;21), welche eine stromaufwärts und stromabwärts des Luftfilters (3;21) ausmündende Hilfsluftleitung (6;35) umfasst, dadurch gekennzeichnet, dass die Hilfsluftleitung (6;35) eine auf den Druckverlust des Luftfilters (3;21) zurückzuführende Luftströmung mit einer gemäss dem Druckverlust veränderlichen Geschwindigkeit erzeugt und dass die Vorrichtung ebenfalls ein erstes in der Hauptleitung (1) angeordnetes Fühlermittel (4;43) zur Lieferung eines die Strömungsgeschwindigkeit der den Luftfilter (3;21) durchsetzenden Luft betreffendes Signals ; ein zweites ein die Luftströmungsgeschwindigkeit in der Hilfsleitung (6;35) betreffendes Signal lieferndes Fühlermittel (5;44) und einen elektronischen Schaltkreislauf (46) aufweist, welcher ausgehend von den Signalen des ersten und des zweiten Fühlermittels (4,5;43,44) ein die Grenzverschmutzung des Luftfilters (3;21) darstellendes Signal abgibt, wenn die Luftströmungsgeschwindigkeiten in der Hauptleitung (1) und in der Hilfsleitung (6;35) sich durch einen dem Grenzdruckverlust des Luftfilters (3;21) entsprechenden bestimmten Wert voneinander unterscheiden.

2. Vorrichtung nach Anspruch 1, dadurch gekennzeichnet, dass die Hilfsluftleitung (6) ein mit der Hauptleitung (1) verbundenes und stromabwärts des Luftfilters (3) ausmündendes Ende hat und das zweite Fühlermittel (5) in der Hilfsleitung (6) angeordnet ist.

3. Vorrichtung nach Anspruch 1 oder 2, dadurch gekennzeichnet, dass die Hilfsleitung (6) an die Hauptleitung (1) nebenanschlußartig abgezweigt angeschlossen ist und ebenfalls stromaufwärts des Luftfilters (3) ausmündet.

4. Vorrichtung nach Anspruch 1 oder 2, dadurch gekennzeichnet, dass die Hilfsleitung (6) mit ihrem dem in die Leitung des Luftfilters (3) ausmündenden Ende entgegengesetzten Ende mit der Aussenluft in Verbindung steht.

5. Vorrichtung nach einem der vorangehenden Ansprüche, dadurch gekennzeichnet, dass die Hilfsleitung (6) solche Abmessungen hat, dass die Luftströmungsgeschwindigkeit in derselben im Bereich des zweiten Fühlermittels (5) etwa gleich der Geschwindigkeit der den Luftfilter (3) durchfliessenden Luft ist, wenn der Luftfilter (3) sauber ist.

6. Vorrichtung nach Anspruch 5, dadurch gekennzeichnet, dass sie eine in der Hilfsleitung (6) gelegene geeichte Öffnung (6b) gegebenenfalls mit einstellbarem Querschnitt umfasst, um die Luftströmungsgeschwindigkeiten in der Hauptleitung (1) und in der Hilfsleitung (6) etwa gleich zu machen.

7. Vorrichtung nach Anspruch 1, dadurch gekennzeichnet, dass die Hilfsleitung (35) in der Hauptleitung (1) axial untergebracht ist und den Luftfilter (21) durchsetzt, indem sie stromaufwärts und stromabwärts des letzteren ausmündet und das zweite Fühlermittel (44) in der die Hilfsleitung (35) durchfliessenden Luftströmung angeordnet und in der Nähe des ersten Fühlermittels (43) gelegen ist.

8. Vorrichtung nach Anspruch 7, dadurch gekennzeichnet, dass die Hilfsleitung (35) ein venturidüsenförmiges Rohr ist.

9. Vorrichtung nach Anspruch 7 oder 8, dadurch gekennzeichnet, dass es einen mit dem Luftfilter (21) fest verbundenen und in diesem einen sich an die Hilfsleitung (35) anschliessenden isolierten Teil (21c) des Luftfilters (21) abgrenzenden Körper (22) zum Tragen der Hilfsleitung (35) umfasst un dass das erste Fühlermittel (43) in der den isolierten Abschnitt (21c) des Luftfilters (21) durchfliessenden Luftströmung gelegen ist.

10. Vorrichtung nach Anspruch 9, dadurch gekennzeichnet, dass das erste und das zweite Fühlermittel (43, 44) in einem ausserhalb des Luftfilters (21) gelegenen und sich an der unterstromigen Fläche des Luftfilters (21) abstützenden kastenförmigen Vorderteil (23) des Tragkörpers (22) angeordnet sind und etwa in einer selben in der Nähe der den Boden des Vorderteiles (23) bildenden Wand (24) liegenden Ebene jeweils gegenüber zwei in der den Boden bildenden Wand (24) gebildeten Öffnungen (25, 26) gelegen sind, welche Öffnungen den Durchfluss jeweils der durch die Hilfsleitung (35) strömenden Luft und der durch den isolierten Abschnitt (21c) des Luftfilters (21) strömenden Luft gestatten.

11. Vorrichtung nach Anspruch 10, dadurch gekennzeichnet, dass das erste und das zweite Fühlermittel (43, 44) an einer Tragplatte (36) angeordnet sind, wobei sie jeweils in zwei Öffnungen (38, 39) der in dem Vorderteil (23) des Tragkörpers (22) abnehmbar untergebrachten und in diesem Vorderteil durch einen an dem Tragkörper (22) befestigten Deckel (37) eingeschlossenen Tragplatte (36) gelagert sind und die ebenfalls zwei Öffnungen (40, 41) mit Durchmessern und Abstand, die denjenigen der Öffnungen (38, 34, 25, 26) der Tragplatte (36) und der einen Boden bildenden Platte (24) gleich sind, umfasst, um den Luftdurchfluss durch die Hilfsleitung (35) und den isolierten Abschnitt (21c) des Luftfilters (21) zu gestatten.

12. Vorrichtung nach Anspruch 11, dadurch gekennzeichnet, dass die Tragplatte (35) eine gedruckte Schaltung bildet, auf welcher das erste und das zweite Fühlermittel (43, 44) sowie die elektronische Schaltung (46) zur Verarbeitung der von diesen Fühlermitteln (43, 44) kommenden Signalen eingesetzt sind.

13. Vorrichtung nach Anspruch 11, dadurch gekennzeichnet, dass die Tragplatte (35), das erste und das zweite Fühlermittel (43, 44) und die elektronische Schaltung (46) zur Verarbeitung der Signale aus diesen Fühlermitteln einen integrierten monolithischen Bestandteil aus Silizium (47) bilden.

14. Vorrichtung nach einem der Ansprüche 9 bis 13, dadurch gekennzeichnet, dass der Tragkörper (22) zwei an die den Boden (24) des Vorderteiles (23) angeschlossene und den Luftfilter (21) durchsetzende hintere, identische, parallele Elemente (27, 28) umfasst, welche voneinander getrennt sind, um den isolierten Abschnitt (21c) des Luftfilters (21) abzugrenzen.

15. Vorrichtung nach Anspruch 14, dadurch gekennzeichnet, dass die Hilfsleitung (35) in einem (28) der hinteren Elemente (27, 28) und durch einen dieses hintere Element (28) verlängernden und von dem Luftfilter (21) vorspringenden Stift (30) abgegrenzt wird.

16. Vorrichtung gemäss den Ansprüchen 14 und 15, dadurch gekennzeichnet, dass das andere hintere Element (27) ebenfalls durch einen aus dem Luftfilter vorpringenden Stift (29) verlängert wird und dass der Vorderteil (23) des Tragkörpers (32) in Abstützung an der entsprechenden Fläche des Luftfilters (21) durch zwei jeweils an den beiden Stiften (29, 30) befestigte Halteglieder (33, 34) gehalten wird, indem er zum Anschlag an der entgegengesetzten Fläche des Luftfilters (21) kommt und die jeweils z.B. durch eine geschlitzte Federscheibe gebildet werden.

17. Vorrichtung nach den Ansprüchen 14 bis 16, dadurch gekennzeichnet, dass im Falle wo der Luftfilter (21) der Gattung mit Falten ist, die beiden hinteren Elemente (27, 28) des Tragkörpers (22) sich an den Hohlraum einer Falte des Luftfilters (21) anschmiegen und die beiden Stifte (29, 30) den Anschlußrand dieser Falte durchsetzen.

18. Vorrichtung nach einem der Ansprüche 7 bis 17, dadurch gekennzeichnet, dass der Vorderteil (23), die hinteren Elemente (27, 28) und die Stifte (29, 30) des Tragkörpers (22) einstückig hergestellt sind.

19. Vorrichtung nach einem der vorangehenden Ansprüche, dadurch gekennzeichnet, dass das erste und das zweite Fühlermittel (43, 44) jeweils durch zwei in die den Luftfilter (21) und die Hauptleitung (35) durchfliessenden Luftströmungen getauchte elektrisch leitende Elemente gebildet werden, deren Widerstände mit der an die Geschwindigkeit dieser Luftströmungen gebundenen Temperatur veränderlich sind.

20. Vorrichtung nach Anspruch 19, dadurch gekennzeichnet, dass die elektronische Schaltung (46) ausgelegt ist, um die veränderlichen Widerstandswerte der beiden elektrisch leitenden Elementen zu vergleichen, deren Widerstände positive oder negative Temperaturkoeffizienten aufweisen und um das die Grenzverschmutzung des Luftfilters (21) darstellende Signal abzugeben, wenn das Verhältnis der Widerstandswerte dieser beiden Elemente (4,43;5,44) dem Grenzdruckverlust des Luftfilters (21) entspricht.

21. Vorrichtung nach Anspruch 19 oder 20, dadurch gekennzeichnet, dass die elektronische Schaltung (46) eine Meßbrückenschaltung mit Widerständen, deren beide benachbarten Schenkel jeweils die beiden leitenden Elemente mit veränderlichen Widerständen (4, 43;5,44) aufweisen, welche eine bestimmte Unbalanzspannung der Brücke abgeben, wenn das Verhältnis der Widerstandswerte der leitenden Elemente (4, 43; 5, 44) dem Grenzdruckverlust des Luftfilters (3; 21) entspricht; und einen an den Ausgang der Meßbrückenschaltung mit Widerständen angeschlossenen Verstärker (10) zur Verstärkung der Ausgangsspannung der Meßbrückenschaltung und somit zur Abgabe des die Grenzverschmutzung des Luftfilters (3;21) darstellenden Signals an ein Verschmutzungsanzeigemittel (9) oder an eine Vorrichtung zur automatischen Reinigung des Luftfilters (3;21) umfasst.

22. Vorrichtung nach einem der Ansprüche 19 bis 21, dadurch gekennzeichnet, dass jedes elektrisch leitendene Element mit veränderlichem Widerstand (4;5) durch den es durchfliessenden Strom unmittelbar erwärmt wird oder durch einen in der Nähe des Elementes gelegenen elektrischen Hilfswiderstand erwärmt wird.

23. Vorrichtung nach einem der vorangehenden Ansprüche, dadurch gekennzeichnet, dass der Verstärker (10) an ein Verschmutzungsanzeigemittel (9) oder an eine Vorrichtung zur automatischen Reinigung des Luftfilters (21) angeschlossen ist.
